# EUROPÄISCHE PATENTSCHRIFT

(11) **EP 2 539 133 B1**
(45) Veröffentlichungstag und Bekanntmachung des Hinweises auf die Patenterteilung: **27.11.2013**
(21) Anmeldenummer: 11700390.5
(22) Anmeldetag: 13.01.2011
(51) Int. Cl.: B29C 49/24, B29C 49/36, B29C 49/78

(54) **VORRICHTUNG UND VERFAHREN ZUM HERSTELLEN ETIKETTIERTER KUNSTSTOFFBEHÄLTER**
DEVICE AND METHOD FOR PRODUCING LABELED PLASTIC CONTAINERS
DISPOSITIF ET PROCÉDÉ POUR FABRIQUER DES RÉCIPIENTS EN MATIÈRE PLASTIQUE ÉTIQUETÉS

(30) Priorität: 23.02.2010 DE 102010002246
(43) Veröffentlichungstag der Anmeldung: 02.01.2013
(73) Patentinhaber: Krones AG, 93073 Neutraubling (DE)
(72) Erfinder: VOTH, Klaus, 93083 Obertraubling (DE)
(74) Vertreter: Grünecker, Kinkeldey, Stockmair & Schwanhäusser
(86) Internationale Anmeldenummer: PCT/EP2011/000125
(87) Internationale Veröffentlichungsnummer: WO 2011/103942

(56) Entgegenhaltungen:
- DE-A1- 19 806 647
- DE-A1- 19 819 731

## Beschreibung

Die Erfindung betrifft eine Vorrichtung zum Herstellen etikettierter Kunststoffbehälter nach dem Oberbegriff des Anspruchs 1 sowie ein Verfahren zum Herstellen etikettierter Kunststoffbehälter.

Bei der Herstellung etikettierter Kunststoffbehälter, wie beispielsweise PET-Flaschen, werden die Behälter üblicherweise zunächst in einer Blasmaschine aus Vorformlingen hergestellt und anschließend an eine separate Etikettiermaschine überführt. Für die Behälterübergabe zwischen den Maschinen sind Einlauf- und Auslaufsterne sowie eine Transportvorrichtung vorzusehen, was einen erheblichen Geräteeinsatz und Platzbedarf verursacht. Es ist daher wünschenswert, sowohl die Anzahl der benötigten Aggregate als auch den Platzbedarf für die Herstellung etikettierter Kunststoffbehälter zu reduzieren.

Der in der WO 2008/116525 A3 beschriebene Problemlösungsansatz, den Behälter bereits beim Blasen in der Blasform zu etikettieren, hat den Nachteil, dass dann Einrichtungen zum Bereitstellen und Fixieren der Etiketten in der Blasform vorzusehen sind, was zu einer unerwünschten Komplexität der Blasform führt. Außerdem sind die Blasformen jeweils nur für wenige Etikettentypen und -größen geeignet.

Ein weiteres Verfahren und eine Vorrichtung zum Herstellen von etikettierten Kunststoffflaschen sind aus der DE 19819731 A1 bekannt.

Um auf ein separates Etikettieraggregat verzichten zu können, wird in der DE 19806647 A1 alternativ vorgeschlagen, das Etikett auf dem Vorformling anzubringen und mit diesem in die Blasform einzubringen. In diesem Fall muss bei der Gestaltung des Etiketts jedoch berücksichtigt werden, dass sich dieses in der Blasform mit dem Vorformling dehnt. Außerdem ist man auch hier bei der Auswahl der Etikettentypen eingeschränkt, beispielsweise auf Rundumetiketten, so dass weiterhin Bedarf dafür besteht, den Geräteaufwand und den Platzbedarf zum Etikettieren zu reduzieren und gleichzeitig eine hohe Flexibilität bei der Auswahl der Etikettentypen zu gewährleisten.

Diese Aufgabe wird dadurch gelöst, dass bei der erfindungsgemäßen Vorrichtung im Bereich des Blasrads eine Etikettiervorrichtung derart angeordnet ist, dass die Behälter auf dem Blasrad umlaufend etikettiert werden können. Demnach erfüllt das Blasrad zusätzlich eine Transportfunktion, um die fertig geblasenen Behälter zu der Etikettiervorrichtung zu transportieren. Dadurch wird eine separate Transportvorrichtung zwischen dem Blasrad und der Etikettiervorrichtung entbehrlich, ebenso wie separate Vorrichtungen für den Auslauf der Behälter aus dem Blasrad und deren Einlauf in die Etikettiervorrichtung.

Vorzugsweise ist die Etikettiervorrichtung im Wesentlichen stationär in einem umfänglichen Randbereich des Blasrads angeordnet. Dadurch kann das Blasrad zusätzlich wie ein rotierender Behältertisch eingesetzt werden, um die geformten Behälter an einer oder an mehreren Etikettiervorrichtungen entlang zu führen. Dadurch können Etikettiervorrichtungen bzw. -module, wie sie auch in herkömmlichen Etikettiermaschinen verwendet werden, ohne größere Umbauten neben dem Blasrad angeordnet werden.

Eine besonders günstige Ausgestaltung der Vorrichtung ist so eingerichtet, dass die Behälter jeweils bei einem ersten Umlauf des Blasrads geformt und bei einem weiteren, zweiten Umlauf des Blasrads etikettiert werden, wobei der zweite Umlauf insbesondere unmittelbar auf den ersten Umlauf folgt. Dadurch ist es möglich, die Behälter während des ersten Umlaufs im Wesentlichen unabhängig von der Etikettierung herzustellen, d. h. ohne die Parameter für die Ausformung des Behälters an die nachfolgende Etikettierung anpassen zu müssen. Beispielsweise kann dann für die Ausformung der Behälter im Wesentlichen der gleiche Prozesswinkel bereit gestellt werden wie bei einer herkömmlichen Blasmaschine ohne Etikettierfunktion. Ebenso kann das Blasrad im Wesentlichen mit der gleichen Geschwindigkeit rotieren, so dass die Maschinenleistung der Vorrichtung nicht wegen der zusätzlichen Etikettierfunktion reduziert werden muss.

Vorzugsweise sind an dem Blasrad umlaufende, drehbare Haltevorrichtungen für die Behälter vorgesehen, um die Behälter beim Etikettieren im Wesentlichen um ihre Hauptachse zu drehen und an der Etikettiervorrichtung entlang zu führen. Dadurch können die Behälter in eine für die Etikettierung geeignete Ausgangsdrehlage gebracht und während des Etikettiervorgangs gezielt an der Etikettiervorrichtung positioniert und gedreht werden.

Bei einer besonders günstigen Ausgestaltung sind die Haltevorrichtungen auf dem Blasrad weiter außen angeordnet als die Blasformen, insbesondere in azimutalen Positionen zwischen den Blasformen. Dadurch sind die Behälter für das Etikettieren besonders gut zugänglich. Außerdem können die Haltevorrichtungen besonders Platz sparend auf dem Blasrad angeordnet werden. Auch das Einbringen der Vorformlinge in die Blasformen und die Entnahme der geformten Behälter aus den Blasformen ist dann besonders einfach.

Vorzugsweise ist an den Haltevorrichtungen jeweils eine Kühlvorrichtung zum Kühlen der Behälter, insbesondere eines Bodenbereichs der Behälter, vorgesehen. Dadurch kann die Verweilzeit der Behälter auf dem Blasrad besonders effizient genutzt werden bzw. eine zusätzliche Vorrichtung und Zeitbedarf für die Kühlung eingespart werden. Am Behälterboden befindet sich der Anspritzpunkt der Preform. Diese Materialanhäufung muss länger gekühlt werden, damit der Behälterboden sich bei Druckbeaufschlagung der Flasche (z.B. im Füller) nicht auswölben kann. Vorzugsweise ist an dem Blasrad mindestens eine Übergabevorrichtung zur Übergabe der Behälter von den Blasformen an die Haltevorrichtungen vorgesehen. Dies ermöglicht eine schnelle und sichere Übergabe der Behälter von den Blasformen an die Haltevorrichtungen. Die Übergabevorrichtung kann beispielsweise mitrotierend zwischen je einer Blasform und einer Haltevorrichtung vorgesehen sein, aber auch feststehend, beispielsweise in Form eines zusätzlichen Transfersternrads mit steuerbaren Greifern.

Bei einer besonders günstigen Ausgestaltung ist ferner eine Steuereinheit zum Steuern der Vorrichtung vorgesehen, insbesondere zur gemeinsamen Steuerung des Blasrads und der Etikettiervorrichtung. Dies ermöglicht eine besonders effektive und genaue Synchronisierung des Blasvorgangs und des Etikettiervorgangs. Eine gemeinsame Steuerung vereinfacht außerdem die Kommunikation zwischen den funktionellen Einheiten der Vorrichtung sowie die Bedienung der Vorrichtung und führt zu einer Reduzierung des apparativen Aufwands und Erhöhung der Funktionssicherheit.

Bei einer besonders günstigen Ausführungsform sind ferner ein Einlaufsternrad zur Übergabe von Behälterrohlingen an die Blasformen vorgesehen sowie ein Auslaufsternrad zur Entnahme der etikettierten Behälter aus den Haltevorrichtungen. Dadurch kann die erfindungsgemäße Vorrichtung problemlos in eine Produktionsanlage für Behälter bzw. in eine Abfüllanlage integriert werden.

Die der Erfindung zugrundeliegende technische Aufgabe wird ferner gelöst mit einem Verfahren, bei dem die Behälter zunächst auf einem Blasrad hergestellt und anschließend bei einem weiteren Umlauf des Blasrads auch etikettiert werden. Dadurch dass die ausgeformten Behälter auch beim Etikettieren weiter auf dem Blasrad verbleiben, kann eine separate Transportvorrichtung zwischen dem Blasrad und der Etikettiervorrichtung eingespart werden, ebenso wie separate Vorrichtungen für den Auslauf der Behälter aus dem Blasrad und deren Einlauf in die Etikettiervorrichtung.

Vorzugsweise werden die Behälter jeweils bei einem ersten Umlauf des Blasrads geblasen und bei einem anschließenden zweiten Umlauf des Blasrads etikettiert. Dies ermöglicht ein besonders effizientes Verfahren. Insbesondere können die Behälter während des ersten Umlaufs des Blasrads hergestellt werden, ohne die Blasparameter an die nachfolgende Etikettierung anpassen zu müssen. Beispielsweise steht dann für die Ausformung der Behälter im Wesentlichen der gleiche Prozesswinkel zur Verfügung wie bei einer herkömmlichen Blasmaschine ohne Etikettierfunktion. Ebenso kann das Formen der Behälter und das Etikettieren mit der gleichen Produktionsleistung erfolgen wie beim Formen und Etikettieren in getrennten Maschinen.

Bei einer besonders günstigen Ausgestaltung werden die Behälter, insbesondere ein Bodenbereich der Behälter, jeweils beim zweiten Umlauf des Blasrads gekühlt. Dadurch kann die Verweilzeit der Behälter auf dem Blasrad besonders effizient genutzt werden und zusätzlicher Zeitbedarf für die Kühlung vermieden werden.

Vorzugsweise werden die Behälter vor dem und/oder beim Etikettieren zumindest zeitweise um ihre Längsachse gedreht. Dadurch können die Behälter in eine für die Etikettierung geeignete Ausgangsdrehlage gebracht und der Etikettiervorgang optimiert werden.

Eine besonders günstige Ausgestaltung des Verfahrens umfasst ferner folgende Schritte: Übergeben vorgewärmter Behälterrohlinge an die entlang einer ersten, insbesondere inneren Transportbahn des Blasrads umlaufenden Blasformen; Übergeben der geformten Behälter an im Wesentlichen entlang einer zweiten, insbesondere äußeren Transportbahn des Blasrads umlaufende Haltevorrichtungen, um die Behälter an einer Etikettiervorrichtung entlang zu führen; und Entnahme der etikettierten Behälter von der zweiten Transportbahn. Dadurch, dass an dem Blasrad getrennte Transportbahnen für das Blasen und das Etikettieren der Behälter vorgesehen ist, können beide Verfahrensschritte jeweils getrennt während eines eigenen Umlaufs des Blasrads durchgeführt werden. Dies begünstigt die Kombination des Blasrads mit herkömmlichen Etikettiervorrichtungen und eine hohe Maschinenleistung.

Vorzugsweise werden die Behälter durch Anbringen eines Etiketts und/oder durch Direktbedruckung etikettiert. Dies ermöglicht eine besonders vielseitige Anwendung des Verfahrens. Geeignete Etiketten sind beispielsweise Etiketten von der Rolle und Selbstklebeetiketten.

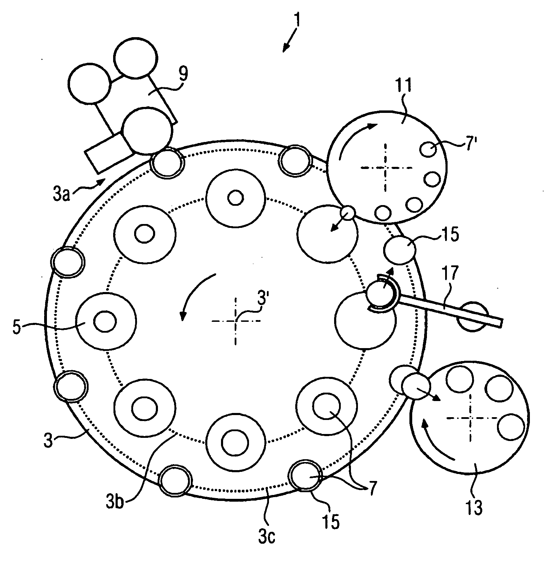

Eine bevorzugte Ausführungsform der Erfindung ist in der einzigen Figur dargestellt, die eine schematische Draufsicht auf eine erfindungsgemäße Vorrichtung zeigt.

Demnach umfasst die erfindungsgemäße Vorrichtung 1 ein Blasrad 3 mit einer Vielzahl Blasstationen bzw. Blasformen 5 zum Herstellen von Kunststoffbehältern 7, wie beispielsweise PET-Flaschen. In einem umfänglichen Randbereich 3a des Blasrads 3 ist ferner eine vorzugsweise stationäre Etikettiervorrichtung 9 vorgesehen, wie beispielsweise ein Etikettieraggregat für Rundumetiketten von der Rolle, ein Kaltleim-Etikettieraggregat, ein Spendeaggregat für Selbstklebeetiketten oder ein Aggregat für zugeschnittene Rundumetiketten. Bei der Etikettiervorrichtung 9 kann es sich jedoch auch um ein Aggregat für die Direktbedruckung der Behälter 7 handeln. Ebenso ist es denkbar, zur Etikettierung mehrere der vorgenannten Aggregate in beliebiger Weise, insbesondere aufeinander folgend, zu kombinieren.

An der Vorrichtung 1 sind ferner vorgesehen ein Einlaufsternrad 11 zum Einleiten von Vorformlingen (Behälterrohlingen) 7' in die Blasformen 5 sowie ein Auslaufsternrad 13 zum Ausleiten der fertig ausgeformten und etikettierten Behälter 7 von dem Blasrad 3.

Auf dem Blasrad 3 mitrotierend sind ferner Haltevorrichtungen 15 zur Aufnahme der ausgeformten Behälter 7 vorgesehen, wobei sich die Blasformen 5 entlang einer inneren Transportbahn 3b um die Achse 3' des Blasrads 3 bewegen und die Haltevorrichtungen 15 um eine äußere Transportbahn 3c. Dadurch sind die in den Haltevorrichtungen 15 gehaltenen Behälter 7 besonders gut zum Etikettieren zugänglich. Die Transportbahnen 3b, 3c sind vorzugsweise im Wesentlichen konzentrisch zueinander angeordnet.

Wie der Figur ferner zu entnehmen ist, sind die Blasformen 5 und die Haltevorrichtungen 15 vorzugsweise bezüglich des Rotations- bzw. Maschinenwinkels des Blasrads 3, also bezüglich ihrer azimutalen Position auf dem Blasrad 3, versetzt zueinander angeordnet. Dies ermöglicht eine besonders platzsparende Anordnung der Blasformen 5 und der Halterichtungen 15 und erleichtert den Zugang zu den Blasformen 5, insbesondere durch einen zwischen je zwei Haltevorrichtungen 15 ausgebildeten Zwischenraum. Es wäre jedoch auch möglich, die Blasformen 5 und die Haltevorrichtungen 15 in im Wesentlichen übereinstimmenden azimutalen Positionen anzuordnen.

Die Haltevorrichtungen 15 sind vorzugsweise um eine zur Rotationsachse 3' des Blasrads 3 parallele Achse drehbar, um die Behälter 7 um ihre Längsachse, insbesondere entgegen der Drehrichtung des Blasrads 3 zu drehen. Dadurch lassen sich zu etikettierende Bereiche der Behälter 7 bezüglich der Etikettiervorrichtung 9 vor und während der Etikettierung ausrichten. Die Haltevorrichtungen 15 umfassen beispielsweise drehbare Auflageteller und Zentrierglocken zur Fixierung und Drehung der Behälter 7. Derartige Halteelemente sind von rotierenden Behältertischen in Etikettiermaschinen bekannt und daher nicht separat dargestellt. Für den Antrieb der Haltevorrichtungen 15 eignen sich beispielsweise motorgetriebene Zahnriemen, Drehkreuze und Kurvensegmente oder ein individueller Antrieb mit rechnergesteuerten Servomotoren.

Im Bereich der Halterungen 15 bzw. der Transportbahn 3c, die vorzugsweise kreisförmig ist, erfüllt das Blasrad 3 somit im Wesentlichen die Funktion eines Behältertisches einer separaten Etikettiermaschine.

In der Figur lediglich schematisch angedeutet ist ferner eine Übergabevorrichtung 17 zur Übergabe der ausgeformten Behälter 7 von den Blasformen 5 an die Haltevorrichtungen 15. Die Übergabevorrichtung 17 könnte sowohl stationär angeordnet sein, beispielsweise in Form eines zusätzlichen Transfersternrads (nicht dargestellt) mit steuerbaren Greifern, als auch auf dem Blasrad 3 mitrotierend (nicht dargestellt). In letzterem Falle könnte beispielsweise ein beweglicher Greifarm zwischen je einer Blasformen 5 und der zugehörigen Haltevorrichtungen 15 vorgesehen sein. Eine mitrotierende Übergabevorrichtung 17 könnte z. B. mit Hilfe von Steuerkurven bewegt werden.

Das Einlaufsternrad 11 ist z. B. ein Transferrad, das für den Einlauf von Vorformlingen 7' in Blasmaschinen Stand der Technik ist. Ebenso kann das Auslaufsternrad 13 ein herkömmliches Transferrad zum Ausleiten fertig geblasener Flaschen aus Blasmaschinen sein.

Dadurch, dass die Blasformen 5 und die Haltevorrichtungen 15 entlang getrennter, vorzugsweise im Wesentlichen konzentrischer Transportbahnen 3b, 3c auf dem Blasrad 3 umlaufen, können die Behälter 7 während eines ersten Umlaufs des Blasrads 3 geformt und während des anschließenden zweiten Umlaufs des Blasrads 3 etikettiert werden. Dadurch kann der eigentliche Blasvorgang während des ersten Umlaufs des Blasrads 3 im Wesentlichen so erfolgen, wie dies aus dem Stand der Technik bekannt ist, insbesondere unter Ausnutzung des gleichen Prozesswinkels des Blasrads 3. Die Blasformen 5 sind daher in der Figur nur schematisch angedeutet. Ebenso wurde auf eine Darstellung des Öffnens und des Schließens der Blasformen 5 der Übersichtlichkeit halber verzichtet.

Um beim Ausformen der Behälter 7 den Prozesswinkel bzw. den Prozessablauf einer herkömmlichen, separaten Blasmaschine zu gewährleisten, kann die Übergabevorrichtung 17 so ausgelegt sein, dass die Übergabe der Behälter 7 von den Blasformen 5 an die Haltevorrichtungen 15 bei einer Position erfolgt, die im Wesentlichen der Position des Auslaufs der Behälter 7 aus dem Blasrad einer Blasmaschine ohne Etikettierfunktion entspricht. Mit der erfindungsgemäßen Vorrichtung 1 lässt sich folglich eine durch den Blasprozess vorgegebene Maschinenleistung auch nach Integration der zusätzlichen Etikettierfunktion im Wesentlichen beibehalten.

Während eines zweiten Umlaufs des Blasrads 3 kann der fertig geblasene Behälter 7 mit einer Etikettiervorrichtung 9 oder mit mehreren Etikettiervorrichtungen 9 (nicht gezeigt) etikettiert werden. Außerdem kann an der Haltevorrichtung 15 eine Kühlung vorgesehen sein, insbesondere zur Kühlung des Bodenbereichs der Behälter 7, so dass die Zeit des zweiten Umlaufs um das Blasrad 3 besonders effektiv genutzt werden kann.

Die Lage der Transportbahnen 3b, 3c zueinander ist nicht auf die beschriebene, vorteilhafte Ausführungsform beschränkt. Beispielsweise könnte die innere Transportbahn 3b stattdessen eine obere Transportbahn sein, und die äußere Transportbahn 3c eine untere Transportbahn, oder auch umgekehrt. Entscheidend ist, dass getrennte Transportbahnen 3b, 3c für die Blasformen 5 und die Halterungen 15 vorgesehen sind, so dass das Ausformen der Behälter 7 und das Etikettieren der Behälter 7 während separater Umläufe des Blasrads 3 erfolgen kann.

Die Vorrichtung 1 umfasst vorzugsweise eine (nicht dargestellte) Steuereinrichtung zur Steuerung des Blasvorgangs und des Etikettiervorgangs. Besonders günstig ist eine gemeinsame Steuervorrichtung, die sowohl das Blasrad 3, die Übergabevorrichtung 17, die Haltevorrichtungen 15 und die Etikettiervorrichtung 9 synchronisiert ansteuert. Dadurch lässt sich die Kommunikation zwischen den einzelnen funktionellen Einheiten der Vorrichtung 1 vereinfachen und eine besonders hohe Bedienerfreundlichkeit sowie Funktionssicherheit gewährleisten.

Bei der erfindungsgemäßen Vorrichtung 1 hat das Blasrad 3 eine zusätzliche Transport-und Ausrichtfunktion für die Behälter 7, vergleichbar der eines Behältertisches einer separaten Etikettiermaschine. Dadurch lässt sich nicht nur der Behältertisch bzw. die separate Etikettiermaschine einsparen sondern auch die ansonsten für die Übergabe der fertig geblasenen Behälter 7 an die Etikettiermaschine notwendigen zusätzlichen Transport- und Übergabevorrichtungen. Dadurch kann eine besonders einfache Vorrichtung 1 zur Herstellung etikettierter Behälter 7 mit besonders geringem Platzbedarf realisiert werden.

Mit der erfindungsgemäßen Vorrichtung 1 kann wie folgt gearbeitet werden:

Ein kontinuierlicher Strom vorgewärmter Vorformlinge 7' wird mit dem Einlaufsternrad 11 an das sich kontinuierlich drehende Blasrad 3 übergeben. Die Vorformlinge 7' werden in den geöffneten Blasformen 5 auf bekannte Weise positioniert und die Blasformen 5 geschlossen. Während eines ersten Umlaufs des Blasrads 3 werden die Vorformlinge 7' im Blas-, bzw. Streckblasverfahren in bekannter Weise zu den Behältern 7 ausgeformt. Nach der Herstellung der Behälter 7, gegen Ende des ersten Umlaufs, werden die Blasformen 5 wieder geöffnet und die fertig geformten Behälter 7 von der Übergabevorrichtung 17 an je eine Haltevorrichtung 15 übergeben. Während eines weiteren, zweiten Umlaufs des Blasrads 3 werden die Behälter 7 von den Haltevorrichtung 15 in eine für die Etikettierung geeignete Drehlage gebracht, der Etikettiervorrichtung 9 zugeführt und bei Bedarf auch während des Etikettierens gedreht. Die Etikettiervorrichtung 9 stellt Etiketten bzw. einen Aufdruck (jeweils nicht dargestellt) bereit und etikettiert bzw. bedruckt die Behälter 7, die vom Blasrad 3 schließlich weiter transportiert und als kontinuierlicher Produktstrom mit dem Auslaufstern 13 ausgeleitet werden.

Hierbei übernimmt das Blasrad 3 mit den Haltevorrichtungen 15 die Funktion eines Behältertisches einer separaten Etikettiermaschine. Es ist daher möglich, die Behälter 7 mit einer herkömmlichen Etikettiervorrichtung 9 zu etikettieren, wie beispielsweise mit einem Etikettieraggregat für Rundumetiketten von der Rolle. Ebenso ist es denkbar, während des zweiten Umlaufs des Blasrads 3 mehrere Etikettiervorgänge an unterschiedlichen, im Produktstrom hintereinander angeordneten Etikettiervorrichtungen 9 vorzunehmen. Hierbei ist es vorteilhaft aber nicht zwingend notwendig, dass der erste und der zweite Umlauf des Blasrads 3 zum Ausformen bzw. Etikettieren der Behälter 7 unmittelbar aufeinander folgen. Es sind beliebige, zwischengeschaltete Umläufe zum Bereitstellen von Speicherpositionen oder Übergabepositionen für die Behälter 7 auf dem Blasrad 3 denkbar, solange ein kontinuierlicher Produktstrom gewährleistet bleibt.

Das erfindungsgemäße Verfahren lässt sich somit besonders flexibel an unterschiedliche Behälter 7 und unterschiedliche Etikettentypen anpassen. Durch die Bereitstellung getrennter Transportbahnen 3b, 3c zum Ausformen der Behälter 7 bzw. zum Etikettieren der ausgeformten Behälter 7 ist es möglich, die Verweildauer der Behälter 7 auf dem Blasrad 3 für das Etikettieren der Behälter 7 zu erhöhen, ohne dadurch die Maschinenleistung der Vorrichtung 1 zu reduzieren.

## Patentansprüche

1. Vorrichtung (1) zum Herstellen etikettierter Kunststoffbehälter (7), umfassend ein Blasrad (3) mit mehreren Blasformen (5) zum Formen der Behälter (7),
**gekennzeichnet durch**
eine Etikettiervorrichtung (9), die im Bereich des Blasrads (3) derart angeordnet ist,
dass die Behälter (7) auf dem Blasrad (3) umlaufend etikettiert werden können.

2. Vorrichtung nach Anspruch 1, **dadurch gekennzeichnet, dass** die Etikettiervorrichtung (9) im Wesentlichen stationär in einem umfänglichen Randbereich (3a) des Blasrads (3) angeordnet ist.

3. Vorrichtung nach Anspruch 1 oder 2, **dadurch gekennzeichnet, dass** die Vorrichtung (1) so eingerichtet ist, dass die Behälter (7) jeweils bei einem ersten Umlauf des Blasrads (3) geformt und bei einem weiteren, zweiten Umlauf des Blasrads (3) etikettiert werden.

4. Vorrichtung nach einem der vorigen Ansprüche, **dadurch gekennzeichnet, dass** auf dem Blasrad (3) umlaufende, drehbare Haltevorrichtungen (15) für die Behälter (7) vorgesehen sind, um die Behälter (7) beim Etikettieren im Wesentlichen um ihre Hauptachse zu drehen und an der Etikettiervorrichtung (9) entlang zu führen.

5. Vorrichtung nach Anspruch 4, **dadurch gekennzeichnet, dass** die Haltevorrichtungen (15) auf dem Blasrad (3) weiter außen angeordnet sind als die Blasformen (5), insbesondere in azimutalen Positionen zwischen den Blasformen (5).

6. Vorrichtung nach Anspruch 4 oder 5, **dadurch gekennzeichnet, dass** an den Haltevorrichtungen (15) jeweils eine Kühlvorrichtung zum Kühlen der Behälter (7), insbesondere eines Bodenbereichs der Behälter (7), vorgesehen ist.

7. Vorrichtung nach einem der vorigen Ansprüche, **dadurch gekennzeichnet, dass** an dem Blasrad (3) mindestens eine Übergabevorrichtung (17) zur Übergabe der Behälter (7) von den Blasformen (5) an die Haltevorrichtungen (15) vorgesehen ist.

8. Vorrichtung nach einem der vorigen Ansprüche, ferner **gekennzeichnet durch** eine Steuereinheit zum Steuern der Vorrichtung (1), insbesondere zur gemeinsamen Steuerung des Blasrads (3) und der Etikettiervorrichtung (9).

9. Vorrichtung nach einem der vorigen Ansprüche, ferner **gekennzeichnet durch** ein Einlaufsternrad (11) zur Übergabe von Behälterrohlingen (7') an die Blasformen (5) und ein Auslaufsternrad (13) zur Entnahme der etikettierten Behälter (7) aus den Haltevorrichtungen (15).

10. Verfahren zum Herstellen etikettierter Kunststoffbehälter (7), bei dem die Behälter zunächst auf einem Blasrad (3) hergestellt und anschließend bei einem weiteren Umlauf des Blasrads (3) auch etikettiert werden.

11. Verfahren nach Anspruch 10, **dadurch gekennzeichnet, dass** die Behälter (7) jeweils bei einem ersten Umlauf des Blasrads (3) geblasen und bei einem anschließenden zweiten Umlauf des Blasrads (3) etikettiert werden.

12. Verfahren nach Anspruch 11, **dadurch gekennzeichnet, dass** die Behälter (7), insbesondere ein Bodenbereich der Behälter, jeweils beim zweiten Umlauf des Blasrads (3) gekühlt werden.

13. Verfahren nach einem der Ansprüche 10 bis 12, **dadurch gekennzeichnet, dass** die Behälter (7) vor dem und/oder beim Etikettieren zumindest zeitweise um ihre Längsachse gedreht werden.

14. Verfahren nach einem der Ansprüche 10 bis 13, ferner **gekennzeichnet durch** folgende Schritte:
- Übergeben vorgewärmter Behälterrohlinge (7') an die entlang einer ersten, insbesondere inneren Transportbahn (3b) des Blasrads (3) umlaufenden Blasformen (5);
- Übergeben der geformten Behälter (7) an im Wesentlichen entlang einer zweiten, insbesondere äußeren Transportbahn (3c) des Blasrads (3) umlaufende Haltevorrichtungen (15), um die Behälter (7) an einer Etikettiervorrichtung (9) entlang zu führen;
- Entnahme der etikettierten Behälter (7) von der zweiten Transportbahn (3c).

15. Verfahren nach einem der Ansprüche 10 bis 14, **dadurch gekennzeichnet, dass** die Behälter (7) durch Anbringen eines Etiketts und/oder durch Direktbedruckung etikettiert werden.

## Claims

1. Device (1) for producing labelled plastic containers (7), comprising a blowing wheel (3) with a plurality of blow moulds (5) for moulding the containers (7),
**characterised by**
a labelling device (9) which is arranged in the region of the blowing wheel (3) in such way that the containers (7) can be labelled while revolving on the blowing wheel (3).

2. Device according to claim 1, **characterised in that** the labelling device (9) is arranged so as to be substantially stationary in a circumferential edge region (3a) of the blowing wheel (3).

3. Device according to claim 1 or 2, **characterised in that** the device (1) is set up in such a way that the containers (7) are each moulded during a first revolution of the blowing wheel (3) and are labelled during a further, second revolution of the blowing wheel (3).

4. Device according to any one of the preceding claims, **characterised in that** rotatable holding devices (15) for the containers (7) are provided on the revolving blowing wheel (3) in order to rotate the containers (7) substantially about their main axis during labelling and to guide them along the labelling device (9).

5. Device according to claim 4, **characterised in that** the holding devices (15) are arranged further out on the blowing wheel (3) than the blow moulds (5), in particular in azimuthal positions between the blow moulds (5).

6. Device according to claim 4 or 5, **characterised in that** one cooling device respectively is provided on the holding devices (15) for cooling the containers (7), in particular a base region of the containers (7).

7. Device according to any one of the preceding claims, **characterised in that** at least one transfer device (17) for transferring the containers (7) from the blow moulds (5) to the holding devices (15) is provided on the blowing wheel (3).

8. Device according to any one of the preceding claims, also **characterised by** a control unit for controlling the device (1), in particular for joint control of the blowing wheel (3) and the labelling device (9).

9. Device according to any one of the preceding claims, also **characterised by** an infeed star wheel (11) for transferring container preforms (7') to the blow moulds (5) and a discharge star wheel (13) for removing the labelled containers (7) from the holding devices (15).

10. Method for producing labelled plastic containers (7), wherein the containers are firstly produced on a blowing wheel (3) and are then also labelled during a further revolution of the blowing wheel (3).

11. Method according to claim 10, **characterised in that** the containers (7) are each blown during a first revolution of the blowing wheel (3) and are labelled during a subsequent second revolution of the blowing wheel (3).

12. Method according to claim 11, **characterised in that** the containers (7), in particular a base region of the containers, are each cooled during the second revolution of the blowing wheel (3).

13. Method according to any one of claims 10 to 12, **characterised in that** the containers (7) are rotated at least intermittently about their longitudinal axis before and/or during labelling.

14. Method according to any one of claims 10 to 13, also **characterised by** the following steps:
- passing pre-heated container preforms (7') to the blow moulds (5) revolving along a first, in particular inner, conveying path (3b) of the blowing wheel (3);
- passing the moulded containers (7) to holding devices (15) revolving substantially along a second, in particular outer, conveying path (3c) of the blowing wheel (3) in order to guide the containers (7) along a labelling device (9);
- removing the labelled containers (7) from the second conveying path (3c).

15. Method according to any one of claims 10 to 14, **characterised in that** the containers (7) are labelled by attaching a label and/or by direct printing.

## Revendications

1. Dispositif (1) pour la fabrication de contenants ou récipients (7) en matière plastique, étiquetés, comprenant une roue de soufflage (3) avec plusieurs moules de soufflage (5) pour le moulage des contenants (7),
**caractérisé par**
un dispositif d'étiquetage (9), qui est agencé dans la région de la roue de soufflage (3) de manière telle, que les contenants (7) puissent être étiquetés en révolution sur la roue de soufflage (3).

2. Dispositif selon la revendication 1, **caractérisé en ce que** le dispositif d'étiquetage (9) est agencé de manière sensiblement stationnaire dans une zone de bordure (3a) périphérique de la roue de soufflage (3).

3. Dispositif selon la revendication 1 ou la revendication 2, **caractérisé en ce que** le dispositif (1) est conçu de manière à ce que les contenants (7) soient chacun moulés au cours d'un premier tour de révolution de la roue de soufflage (3), et soient étiquetés au cours d'un autre, deuxième, tour de révolution de la roue de soufflage (3).

4. Dispositif selon l'une des revendications précédentes, **caractérisé en ce que** sur la roue de soufflage (3) sont prévus des dispositifs de support (15) rotatifs, en révolution, pour les contenants (7), pour, lors de l'étiquetage, faire tourner les contenants (7) sensiblement autour de leur axe principal, et les mener et guider le long du dispositif d'étiquetage (9).

5. Dispositif selon la revendication 4, **caractérisé en ce que** les dispositifs de support (15) sont agencés sur la roue de soufflage (3) dans une position plus à l'extérieur que les moules de soufflage (5), notamment dans des positions azimutales entre les moules de soufflage (5).

6. Dispositif selon la revendication 4 ou la revendication 5, **caractérisé en ce que** sur chacun des dispositifs de support (15) est agencé un dispositif de refroidissement pour refroidir les contenants (7), notamment une zone de fond des contenants (7).

7. Dispositif selon l'une des revendications précédentes, **caractérisé en ce que** sur la roue de soufflage (3) est prévu un dispositif de transfert (17) pour transférer les contenants (7) des moules de soufflage (5) aux dispositifs de support (15).

8. Dispositif selon l'une des revendications précédentes, par ailleurs **caractérisé par** une unité de commande destinée à commander le dispositif (1), notamment pour la commande en commun de la roue de soufflage (3) et du dispositif d'étiquetage (9).

9. Dispositif selon l'une des revendications précédentes, par ailleurs **caractérisé par** une roue-étoile d'entrée (11) pour le transfert d'ébauches de contenants (7') aux moules de soufflage (5), et une roue-étoile de sortie (13) pour le prélèvement des contenants (7) étiquetés hors des dispositifs de support (15).

10. Procédé pour la fabrication de contenants ou récipients (7) en matière plastique, étiquetés, selon lequel les contenants sont tout d'abord fabriqués sur une roue de soufflage (3), et sont ensuite également étiquetés sur la roue de soufflage (3) lors d'un autre tour de révolution de celle-ci.

11. Procédé selon la revendication 10, **caractérisé en ce que** les contenants (7) sont chacun moulés par soufflage au cours d'un premier tour de révolution de la roue de soufflage (3), et sont étiquetés au cours d'un deuxième tour de révolution suivant de la roue de soufflage (3).

12. Procédé selon la revendication 11, **caractérisé en ce que** les contenants (7), notamment une zone de fond des contenants, sont refroidis chacun au cours du deuxième tour de révolution de la roue de soufflage (3).

13. Procédé selon l'une des revendications 10 à 12, **caractérisé en ce que** l'on fait tourner les contenants (7) avant et/ou pendant l'étiquetage, au moins temporairement, autour de leur axe longitudinal.

14. Procédé selon l'une des revendications 10 à 13, par ailleurs **caractérisé par** les étapes suivantes :
- transfert d'ébauches de contenants (7') préchauffées aux moules de soufflage (5) en révolution le long d'une première voie de transport (3b), notamment intérieure, de la roue de soufflage (3) ;
- transfert des contenants (7) moulés à des dispositifs de support (15) en révolution sensiblement le long d'une deuxième voie de transport (3c), notamment extérieure, de la roue de soufflage (3), en vue de mener et guider les contenants (7) le long d'un dispositif d'étiquetage (9) ;
- prélèvement des contenants (7) étiquetés de la deuxième voie de transport (3c).

15. Procédé selon l'une des revendications 10 à 14, **caractérisé en ce que** les contenants (7) sont étiquetés par l'application d'une étiquette et/ou par impression directe.
